# EUROPÄISCHE PATENTSCHRIFT

(11) **EP 1 127 905 B1**
(45) Veröffentlichungstag und Bekanntmachung des Hinweises auf die Patenterteilung: **09.03.2005**
(21) Anmeldenummer: 01100558.4
(22) Anmeldetag: 10.01.2001
(51) Int. Cl.: C08G 18/38, C08G 18/42, C08G 18/80, C09D 175/06

(54) **Transparente oder pigmentierte Pulverlacke mit Vernetzern aus Hydroxyalkylamiden und blockierten, nicht aromatischen Polyisocyanaten**
Transparent or pigmented powder coatings with crosslinkers from hydroxyalkylamides and blocked non-aromatic polyisocyanates
Revêtements transparents ou pigmentés en poudre ayant des hydroxylalkylamides et des polyisocyanates bloqués non aromatiques comme réticulants

(30) Priorität: 25.02.2000 DE 10008928
(43) Veröffentlichungstag der Anmeldung: 29.08.2001
(73) Patentinhaber: Degussa AG, 40474 Düsseldorf (DE)
(72) Erfinder: Wenning, Andreas, Dr., 48301 Nottuln (DE)

(56) Entgegenhaltungen:
- EP-A- 1 061 069
- US-A- 5 538 759
- US-A- 5 811 190

## Beschreibung

Die Erfindung betrifft transparente oder pigmentierte Pulverlacke mit Vernetzern aus Hydroxyalkylamiden und blockierten, nicht aromatischen Polyisocyanaten und sauren Polymeren, die eine geringere Anfälligkeit gegen Nadelstichbildung aufweisen.

Pulverlacke auf Basis Trigylycidylisocyanurat (TGIC) und säurefunktionellen Polyestern ergeben korrosionbeständige und wetterstabile Pulverbeschichtungen. Die EP 0 536 085 beschreibt jedoch, dass zur Herstellung des TGIC in fester Form teure Verfahren oder ein relativ großer und somit ebenfalls teurer Reinigungsaufwand erforderlich sind. Zudem wird TGIC von der Europäischen Gemeinschaft als mutagen der Kategorie II ("sollte als erbgutverändernd angesehen werden") eingestuft und ist seit dem 31. Mai 1998 als giftig zu kennzeichnen.

Toxikologisch unbedenklich und zugleich auch reaktiver sind β-Hydroxyalkylamide als Vernetzer. In den Patentschriften US 4,076,917 und US 4,101,606 werden β-Hydroxyalkylamide mit Polymeren, die mindestens eine carboxyl- oder Anhydridfunktion aufweisen, insbesondere mit Polyacrylaten zu Pulverlacken kombiniert. Die Patentschrift US 4,988,767 beschreibt Pulverlacke auf Basis von Hydroxyalkylamiden und sauren Acrylatharzen. Die EP 0 322 834 beschreibt wärmehärtende Pulverlacke, die aus Säuregruppen enthaltenden Polyestern und ß-Hydroxyalkylamiden zusammengesetzt sind. Diese Beschichtungen mit β-. Hydroxyalkylamid-Vernetzer sind hochwetterstabil, sehr flexibel, hart und chemikalienresistent. Insbesondere bei höheren Schichtstärken führt jedoch das bei der Vernetzung freiwerdende Wasser zur Nadelstichbildung.

In der Patentschrift US 4,889,890 werden Hybrid-Pulverlacke beschrieben. Die darin enthaltenen sauren Polymere werden mit Polyepoxiden wie z. B. Polyglycidylether aromatischer Phenole gehärtet. Zur Erhöhung der Vemetzungsdichte wird ein ß-Hydroxyalkylamid eingesetzt. Diese Hybrid-Pulverlacke bieten einen guten Korrosionsschutz, sind jedoch für einen Einsatz im Außenbereich aufgrund mangelnder Witterungsbeständigkeit nicht geeignet.

Thometzek et al. in 5^{th} Nümberg Congress, Congress Papers, Volume 1, 251-273 (1999) beschreiben Pulverlacke aus einem hydroxyfunktionellem Polyesterharz, einem Hydroxyalkylamid und einem bifunktionellem Vernetzer, der neben blockierten Isocyanatgruppen Carboxylgruppen enthält. Diese Pulverlacke sind nicht zur Erzielung glänzender sondern matter Beschichtungen geeignet.

Die Aufgabe der vorliegenden Erfindung war es Pulverlacke bereitzustellen, die hochglänzende, flexible, licht- und wetterstabile Beschichtungen mit geringer Störanfälligkeit gegen Nadelstichbildung ergeben.

Überraschenderweise wurde gefunden, daß Beschichtungen aus sauren Polymeren und β-Hydroxyalkylamid-Vemetzern, insbesondere bei größeren Schichtdicken, deutlich weniger anfällig gegen Nadelstichbildung sind, wenn als zusätzliche Komponente blockierte Polyisocyanat-Vernetzer zugegeben werden. Flexibilität, Glanz, Reaktivität und Wetterbeständigkeit bleiben auf dem bekannt hohen Niveau von Polyester/Hydroxyalkylamid- oder Polyurethan-Pulverlacken

Gegenstand der vorliegenden Erfindung sind transparente oder pigmentierte Pulverlacke mit Vernetzern aus Hydroxyalkylamiden und blockierten Polyisocyanaten, im wesentlichen enthaltend:
A) 20 bis 99 Gew.-% mindestens eines sauren Polymers;
B) 1 bis 25 Gew.-% mindestens eines β-Hydroxyalkylamids;
C) 0,05 bis 10 Gew.- % mindestens eines blockierten, nicht aromatischen Polyisocyanates mit einer NCO-Funktionalität ≥ 2;
D) 0 bis 50 Gew.- % mindestens eines Pigmentes und/oder anorganischen Füllstoffes;
E) 0 bis 5 Gew.-% mindestens eines Zuschlag- oder Hilfsstoffes.

Als saures Polymer A) zur Herstellung der erfingungsgemäßen Pulverlacke kommen Polyester- und Acrylatharze in Betracht.
Die sauren Polyester besitzen eine Glasübergangstemperatur (Tg) im Bereich von 30 bis 85 °C und eine Säurezahl von 20 bis 80 mg KOH/g. Sie werden prinzipiell durch eine Kondensationsreaktion aliphatischer Polyole und/oder cycloaliphatischer Polyole mit aliphatischen und/oder aromatischen Polycarbonsäuren und Anhydriden hergestellt. Derartige Polyester werden beispielsweise in der EP 0 322 807, DE 198 50 970 oder WO 95/01406 beschrieben.

Die sauren Acrylatharze besitzen eine Säurezahl im Bereich von 10 bis 250 mg KOH/g und einen Schmelzpunkt von 60 bis 160 °C. Sie werden prinzipiell hergestellt durch Copolymerisation eines Monomerengemisches, bestehend aus,
a) 0 bis 70 Gew.-Teilen Methyl(methacrylat),
b) 0 bis 60 Gew.-Teilen (Cyclo)Alkylestern der Acryl- und/oder Methacrylsäure mit 2 bis 18 Kohlenstoffatomen im Alkyl- bzw. im Cycloalkylrest,
c) 0 bis 90 Gew.-Teilen Vinylaromaten und
d) 0 bis 60 Gew.-Teilen olefinisch ungesättigten Carbonsäuren,
   wobei die Summe der Gewichtsteile der Komponenten a) bis d) 100 ergibt.

Bei den Monomeren b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. bevorzugt geeigneter Monomerer b) sind Ethyl(methyl)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornylmethacrylat, 3,3,5-Trimethylcyclohexylmethacrylat und Stearylmethacrylat.

Als Monomere c) kommen z. B. Styrol, Vinyltoluol und Ethylstyrol in Betracht. Beispiele für d) sind Acryl- und Methacrylsäure, die auch bevorzugt eingesetzt werden, wie auch Crotonsäure, Itaconsäure, Fumarsäure, Maleinsäure und Citaconsäure.

Die Herstellung der Copolymerisate kann durch Copolymerisation der beispielhaft genannten Monomere a) bis d) nach üblichen radikalischen Polymerisationsverfahren erfolgen, wie beispielsweise Lösungs-, Emulsions-, Perl- oder Substanzpolymerisation.

Dabei werden die Monomeren bei Temperaturen von 60 bis 160 °C, vorzugsweise 80 bis 150 °C, in Gegenwart von Radikalbildnern und gegebenenfalls Molekulargewichtsreglern copolymerisiert.

Die Herstellung der carboxylfunktionellen Acrylat-Copolymerisate erfolgt in inerten Lösemitteln. Geeignete Lösemittel sind beispielsweise Aromaten, wie Benzol, Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton, Methylethylketon, Methylisobutylketon, Methyl-n-amylketon, Methylisoamylketon, oder beliebige Gemische derartiger Lösemittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahe einheitliche Copolymere können auch hergestellt werden, indem man die . Reaktionsmischung mit konstanter Geschwindigkeit in einen Rührkessel einlaufen lässt, ohne das Polymerisat abzuführen.

Man kann auch einen Teil der Monomeren beispielhaft in Lösemitteln der genannten Art vorlegen und die restlichen Monomeren und Hilfsmittel getrennt oder gemeinsam in diese Vorlage bei der Reaktionstemperatur eintragen. Im Allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z. B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z. B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z. B. tert.-Butylperbenzoat; Hydroperoxide, wie beispielsweise tert-Butylhydroperoxid, Cumolhydroperoxid; Dialkylperoxide, wie Dicumylperoxid, tert.-Butylcumylperoxid oder Di-tert.butylperoxid. Zur Regelung des Molekulargewichts der Copolymerisate können übliche Regler bei der Herstellung eingesetzt werden. Beispielhaft genannt seien Mercaptopropionsäure, tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozess zugeführt werden, bei dem das Lösemittel beispielsweise in einem Ausdampfextruder oder Sprühtrockner bei ca. 120 bis 160 °C und einem Vakuum von 100 bis 300 mbar entfernt und die erfindungsgemäß zu verwendenden Copolymerisate gewonnen werden.

Derartige Polyacrylate werden beispielsweise in US 4,988,767 genannt.

Als Polycarboxylverbindungen können selbstverständlich auch Gemische mehrerer Stoffe eingesetzt werden.

Die β-Hydroxyalkylamide B) sind prinzipiell bekannt und z. B. in EP 0 957 082, US 4,076,917, US 4,101,606 beschrieben. Die Struktur kann folgendermaßen beschrieben werden: 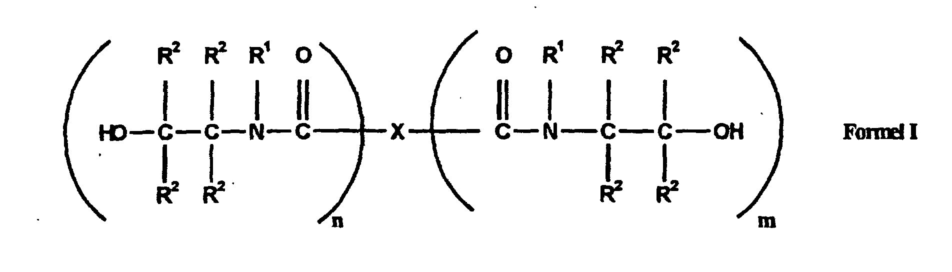 wobei die Substituenten die folgenden Bedeutungen haben:
X: chemische Bindung, Wasserstoff oder eine einwertige oder mehrwertige organische Gruppe, abgeleitet aus gesättigten, ungesättigten oder aromatischen Kohlenwasserstoffgruppen,
   mit 1-24 Kohlenstoffatomen oder diese heteroatomsubstituierten Reste;
R¹: Wasserstoff, Alkyl-, Alkenyl-, Aryl- oder Aralkylrest mit 1-24 Kohlenstoffatomen, diese heteroatomsubstituierten Reste oder 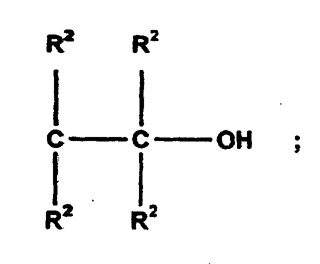
R²: unabhängig voneinander gleiche oder verschiedene Reste, ausgewählt aus Wasserstoff, Alkyl-, Aryl-, Aralkyl- oder Alkenylrest mit 1-24 Kohlenstoffatomen oder diese heteroatomsubstituierten Reste;
n: ganze Zahl von 1-10;
m: ganze Zahl von 0-2; s n+m: ≥2.

Bevorzugte Verbindungen, die zur Herstellung der erfindungsgemäßen Pulverlacke eingesetzt werden, werden gemäß der EP 0 957 082 hergestellt und auf der Seite 4 der A2-Schrift genannt [0026].

Das Mischungsverhältnis der carboxylgruppenhaltigen Polymere A) und der β-Hydroxyalkylamid-Verbindung B) wird in der Regel so gewählt, dass das Verhältnis Carboxylgruppen zu Hydroxylgruppen 0,6 : 1 bis 1,6 : 1 beträgt.

Das nicht aromatische blockierte Polyisocyanat C) mit einer NCO-Funktionalität ≥ 2 ist prinzipiell bekannt. Als Polyisocyanatkomponente kann jedes aliphatische, (cyclo)aliphatische, cycloaliphatische und heterocyclische Polyisocyanat mit mindestens zwei Isocyanatgruppen und Gemische hiervon eingesetzt werden. Derartige Polyisocyanate werden z. B. in Houben-Weyl, Methoden der Organischen Chemie, Band 14/2, Seite 61 ff., und J. Liebigs Annalen der Chemie, Band 562, Seiten 75 bis 136, genannt. Repräsentative Beispiele der Polyisocyanate sind aliphatische Isocyanate wie Alkylenisocyanate, z. B. Ethylendiisocyanat, Propylendiisocyanat, Tetramethylendiisocyanat, Pentamethylendiisocyanat, 2-Methylpentamethylen-1,5-diisocyanat (MPDI), Hexamethylendiisocyanat (HDI), Trimethylhexamethylen-1,6-diisocyanat (TMDI), insbesondere das 2,2,4- und das 2,4,4-Isomere und technische Gemische beider Isomeren, Decamethylendiisocyant und Dodecamethylendiisocyanat sowie Cycloalkylenisocyanate, z. B. 1,3-Cyclopentyldiisocyanat, 1,2-Cyclohexyldiisocyanat, 1,4-Cyclohexyldiisocyanat, ω,ω'-Diisocyanato-1,4-methylcyclohexan, ω,ω'-Diisocyanato-1,3-dimethylcynclohexan, 1-Methyl-2,4-diisocyanatocyclohexan, 4,4'-Methylen-bis(cyclohexylisocyanat), Norbomandiisocyanat (NBDI) und 3,3,5-Tri-methyl-1-isocyanato-3-isocyanatomethylcyclohexan (Isophorondiisocyanat, IPDI).

Als Polyisocyanate C) im Sinne der vorliegenden Erfindung sind auch solche Addukte zu verstehen, die durch Umsetzung der Polyisocyanate mit in der Isocyanatchemie gebräuchlichen Kettenverlängerungsmitteln wie Wasser, Polyolen und Polyaminen erhalten werden. Derartige Verbindungen werden beispielsweise in der DE-OS 27 07 660 aufgeführt. Dabei wird das Kettenverlängerungsmittel in unterschüssiger Menge zum Polyisocyanat eingesetzt, d .h das Reaktionsprodukt enthält im Durchschnitt mindestens zwei Isocyanatgruppen.

Zur Kettenverlängerung geeignete Polyole werden z. B. in DE 19 57 483, 21 05 777, 25 42 191 und 27 38 270 beschrieben. Von den für die Kettenverlängerung geeigneten Polyaminen sollen beispielsweise das Ethylendiamin, Propylendiamin-1,2, Propylendiamin-1,3, Butylendiamin-1,2, Butylendiamin-1,3, Butylendiamin-1,4 sowie die Hexamethylendiamine, die auch einen oder mehrere C₁-C₄-Alkylreste tragen können, genannt werden. Auch disekundäre oder primär/sekundäre Diamine, wie sie z. B. in bekannter Weise aus den entsprechenden diprimären Diaminen durch Reaktion mit einer Carbonylverbindung, wie z. B. einem Keton oder Aldehyd, und nachfolgender Hydrierung oder durch Addition von diprimären Diaminen an Acrylsäureester gewonnen werden, können eingesetzt werden.

Auch eine Molekülvergrößerung der beispielhaft genannten Polyisocyanate durch Trimerisierung, Carbodiimidisierung, Allophanatbildung sowie Biuretisierung, wie sie nach den Angaben z. B. der GB PS 1 391 066, DE-OSS 23 25 826, 29 16 201, 29 29 150 und 36 44 684 (Trimerisierung), DE-OS 36 00 766 (Carbodiimidisierung); EP 0 496 208 und EP 0 524 500 (Allophanatbildung), DE-OSS 22 61 065, 23 08 015, 24 37 130 und 30 07 679 (Biuretisierung) beschrieben wird, ist sehr vorteilhaft.

Zu den zur Blockierung der Polyisocyanate prinzipiell einsetzbaren Blockierungsmittel zählen z. B. Phenole wie z. B. Phenol und p-Chlorphenol, Alkohole wie z. B. Benzylalkohol, Oxime wie z. B. Acetonoxim, Methylethylketoxim, Cyclopentanonoxim, Cyclohexanonoxim, Methylisobutylketoxim, Methyl-tert.-butylketoxim, Diisopropylketoxim, Diisobutylketoxim, Acetophenonoxim, N-Hydroxy-verbindungen wie z. B. N-Hydroxysuccinimid und Hydroxypyridine, Lactame wie z. B. ε-Caprolactam, CHacide Verbindungen wie z. B. Acetessigsäureester und Malonsäureester, Amine wie z. B. Diisoproylamin, heterocyclische Verbindungen mit mindestens einem Heteroatom wie z. B. Mercaptane, Piperidine, Piperazine, Pyrazole, Imidazole, Triazole und Tetrazole, β-Hydroxysäureester wie z. B. Glykolsäureester und Hydroxamsäureester wie z. B. Benzylmethacrylohydroxamat. Eine Zusammenstellung findet sich z. B. bei Zeno W. Wicks, Jr., Progress in Organic Coatings 3 (1975) 73-79, 9 (1981) 3-28.

Als Blockierungsmittel besonders geeignet sind Acetonoxim, Methylethylketoxim und Acetophenonoxim, ε-Caprolactam, Acetessigsäureethylester, Malonsäurediethylester, Diisopropylamin, 3,5-Dimethylpyrazol, 1,2,4-Triazol, Glykolsäurebutylester und Benzylmethacrylohydroxamat. Selbstverständlich können auch Mischungen dieser Blockierungsmittel eingesetzt werden.

Das Mischungsverhältnis β-Hydroxyalkalamid-Verbindung B) und des blockierten, nicht aromatischen Polyisocyanates C) wird in der Regel so gewählt, dass das Verhältnis Hydroxylgruppen zu Isocyanatgruppen 0,5 : 1 bis 2 : 1 beträgt.

Zur Herstellung der gebrauchsfertigen Pulverlacke werden das saure Polymer A), das β-Hydroxyalkylamid B), das nicht aromatische blockierte Polyisocyanat C), gegebenenfalls mit Pigmenten oder Füllstoffen D) wie z. B. TiO₂ oder Bariumsulfat und weiteren für Pulverlacke üblichen Zuschlag- oder Hilfsstoffen E) wie z. B. Verlaufsmittel wie z. B. Polybutylacrylat oder Entgasungsmittel wie Benzoin oder Katalysatoren wie z. B. Dibutylzinndilaurat (DBTL) oder C₁-C₁₈ Zink-, Aluminiumoder Titan-Carboxylat-Salzen oder Aluminium- oder Zinkoxiden gemischt. Alle Inhaltsstoffes des Pulverlackes werden in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches oder tribostatisches Pulversprühen, Wirbelsintern, elektrostatisches Wirbelsintern, erfolgen. Nach dem Pulverauftrag werden die beschichteten Werkstücke zur Aushärtung 60 bis 5 Minuten auf eine Temperatur von 140 bis 220 °C erhitzt.

Im Vergleich zu den bis jetzt bekannten Pulvern auf Basis von sauren Polymeren und β-Hydroxyalkylamiden zeichnen sich die erfindungsgemäßen Pulver durch eine geringe Anfälligkeit zur Nadelstichbildung, insbesondere bei höheren Schichtdicken aus.

Nachfolgend wird der Gegenstand der Erfindung anhand von Beispielen erläutert.

### Beispiele

### 1. Eingesetzte Rohstoffe

### 1.1 Saures Polymer A)

Als saures Polymer wurde der Polyester GRILESTA® P 7617 (Säurezahl 35 mg KOH/g, EMS-Inventa) eingesetzt.

### 1.2 β-Hydroxyalkylamid B)

Als β-Hydroxyalkylamid B) wurde das VESTAGON® EP-HA 320 (OH-Zahl: 668 mg KOH/g, Degussa-Hüls AG) eingesetzt.

### 1.3 Blockiertes Polyisocyanat C)

Als Polyisocyanate C) wurden C1) VESTAGON® B 1530 (caprolactam blockiertes Polyisocyanataddukt, NCO- Zahl 15,3 %, Degussa-Hüls AG) und C2) VESTAGON® EP-B 1613 (triazolblockiertes Polyisocyanataddukt, NCO-Zahl 15,1 mg KOH/g, Degussa Hüls AG) eingesetzt.

### B Pulverlacke

### Allgemeine Herstellungsvorschrift

Die zerkleinerten Produkte, d. h. saurer Polyester, β-Hydroxyalkylamid-Verbindung, blockiertes Polyisocyanat, Verlaufmittel, ggf. Katalysatoren, werden ggf. mit dem Weißpigment in einem Kollergang innig vermischt und anschließend in einem Zweischneckenextruder der Fa. Berstorff bis maximal 140 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 140 und 220 °C eingebrannt.

Die Abkürzungen in den folgenden Tabellen bedeuten:
SD = Schichtdicke in µm
ET = Tiefung nach Erichsen (DIN 53 156)
GS = Gitterschnittprüfung (DIN 53 151)
GG 60 °-Winkel = Messung des Glanzes n. Gardner (ASTM-D 5233)
Imp rev. = Impact reverse in inch•lb

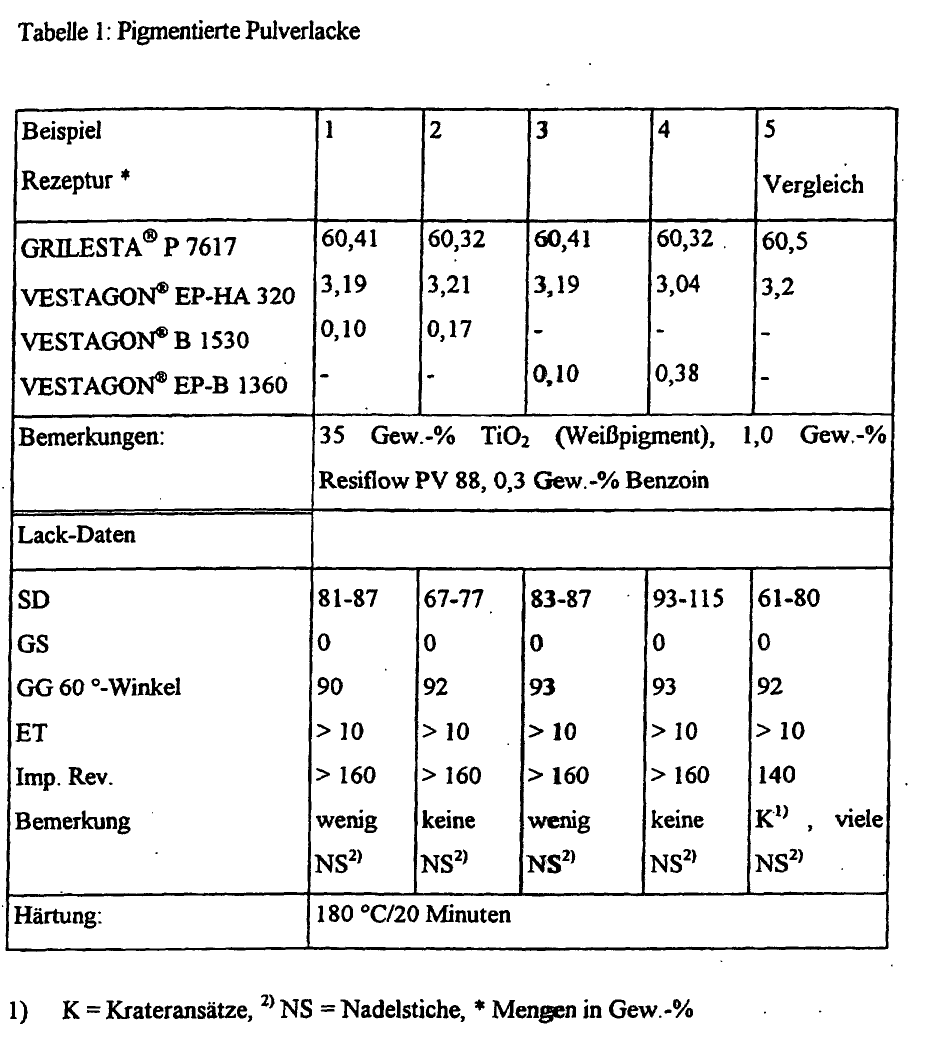

## Patentansprüche

1. Transparente oder pigmentierte Pulverlacke mit Vernetzern aus Hydroxyalkylamiden und blockierten Polyisocyanaten, im wesentlichen enthaltend:
A) 20 bis 99 Gew.-% mindestens eines sauren Polymers;
B) 1 bis 25 Gew.-% mindestens eines β-Hydroxyalkylamids;
C) 0,05 bis 10 Gew.- % mindestens eines blockierten, nicht aromatischen Polyisocyanates mit einer NCO-Funktionalität ≥ 2;
D) 0 bis 50 Gew.- % mindestens eines Pigmentes und/oder anorganischen Füllstoffes;
E) 0 bis 5 Gew.-% mindestens eines Zuschlag- oder Hilfsstoffes.

2. Transparente oder pigmentierte Pulverlacke gemäß Anspruch 1,
**dadurch gekennzeichnet,**
**dass** als saures Polymer A) mindestens ein Polyesterharz mit einer Glasübergangstemperatur im Bereich von 30 bis 85 °C und einer Säurezahl von 20 bis 80 mg KOH/g enthalten ist.

3. Transparente oder pigmentierte Pulverlacke gemäß Anspruch 1,
**dadurch gekennzeichnet,**
**dass** als saures Polymer A) mindestens ein Acrylatharz mit einer Säurezahl im Bereich von 10 bis 250 mg KOH/g und einen Schmelzpunkt von 60 bis 160 °C enthalten ist.

4. Transparente oder pigmentierte Pulverlacke gemäß Anspruch 1,
**dadurch gekennzeichnet,**
**dass** als saures Polyester A) eine beliebige Mischung aus mindestens einem Polyesterharz und mindestens einem Acrylatharz enthalten ist.

5. Tansparente oder pigmentierte Pulverlacke nach mindestens einem der Ansprüche 1 bis 4,
**dadurch gekennzeichnet,**
**dass** das β-Hydroxyalkylamid B) die folgende Formel I aufweist 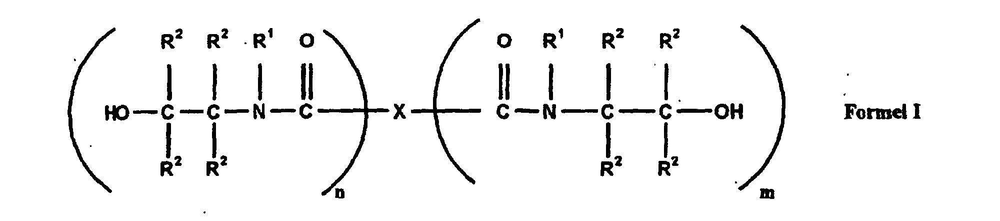
wobei die Substituenten die folgenden Bedeutungen haben:
X: chemische Bindung, Wasserstoff oder eine einwertige oder mehrwertige organische Gruppe, abgeleitet aus gesättigten, ungesättigten oder aromatischen Kohlenwasserstoffgruppen,
mit 1-24 Kohlenstoffatomen oder diese heteroatomsubstituierten Reste;
R¹: Wasserstoff, Alkyl-, Alkenyl-, Aryl- oder Aralkylrest mit 1-24 Kohlenstoffatomen, diese heteroatomsubstituierten Reste oder 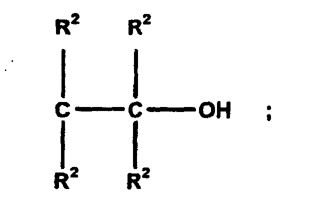
R²: unabhängig voneinander gleiche oder verschiedene Reste, ausgewählt aus Wasserstoff, Alkyl-, Aryl-, Aralkyl- oder Alkenylrest mit 1-24 Kohlenstoffatomen oder diese heteroatomsubstituierten Reste;
n: ganze Zahl von 1-10;
m: ganze Zahl von 0-2;
n + m: ≥ 2.

6. Transparente oder pigmentierte Pulverlacke nach mindestens einem der Ansprüche 1 bis 5,
**dadurch gekennzeichnet,**
**dass** als nicht aromatisches blockiertes Polyisocyanat C) mindestens eine Verbindung aus der Gruppe der aliphatischen, (cyclo)aliphatischen, cycloaliphatischen oder heterocyclischen Polyisocyanate mit mindestens zwei Isocyanatgruppen enthalten ist.

7. Transparente oder pigmentierte Pulverlacke gemäß Anspruch 6,
**dadurch gekennzeichnet,**
**dass** das nicht aromatische blockierte Polyisocyanat C) als Polyisocyanatkomponente 2-Methylpentamethylen-1,5-diisocyanat, 2,2,4-Trimethylhexamethylen-1,6-diisocyanat, 2,4,4-Trimethylhexamethylen-1,6-diisocyanat (TMDI), Norbornandiisocyanat, Isophorondiisocyanat, Isocyanurat des 2-Methylpentamethylen-1,5-diisocyanat, Isocyanurat . des Hexamethylendiisocyanat oder Isocyanurat des Isophorondiisocyanat enthält.

8. Transparente und pigmentierte Pulverlacke nach mindestens einem der Ansprüche 1 und 7,
**dadurch gekennzeichnet,**
**dass** das Polyisocyanat c) mit Acetonoxim, Methylethylketoxim und Acetophenonoxim, ε-Caprolactam, Acetessigsäureethylester, Malonsäurediethylester, Diisopropylamin, 3,5-Dimethylpyrazol, 1,2,4-Triazol, Glykolsäurebutylester oder Benzylmethacrylohydroxamat blockiert ist.

9. Transparente und pigmente Pulverlacke nach mindestens einem der Ansprüche 1 bis 8,
**dadurch gekennzeichnet,**
**dass** kettenverlängerte und/oder durch Trimerisierung, Carbondiimidisierung, Allophanatbildung sowie Biuretisierung molekülvergrößerte Polyisocyanate C) enthalten sind.

10. Transparente oder pigmentierte Pulverlacke nach mindestens einem der Ansprüche 1 bis 9,
**dadurch gekennzeichnet,**
**dass** als Hilfs- und Zuschlagstoffe Verlaufmittel, Entgasungsmittel und/oder Katalysatoren enthalten sind.

11. Transparente oder pigmentierte Pulverlacke gemäß Anspruch 10,
**dadurch gekennzeichnet,**
**dass** Katalysatoren in einer Konzentration von 0,03 bis 1,0 Gew.-%, bezogen auf die gesamte Pulverlackmenge, enthalten sind.

12. Transparente oder pigmentierte Pulverlacke gemäß Anspruch 11,
**dadurch gekennzeichnet,**
**dass** als Katalysatoren Aluminium-Carboxylat-Salze, Titan-Carboxylat-Salze, Aluminiumoxide, Zinkoxide und/oder organische Zinnverbindungen enthalten sind.

13. Transparente oder pigmentierte Pulverlacke nach mindestens einem der Ansprüche 1 bis 12,
**dadurch gekennzeichnet,**
**dass** das Mischungsverhältnis der sauren Polymere A) und der β-Hydroxyalkylamid-Verbindung B) so gewählt wird, dass das Verhältnis Carboxylgruppen zu Hydroxylgruppen 0,6 : 1 bis 1,6 : 1 beträgt.

14. Transparente oder pigmentierte Pulverlacke nach mindestens einem der Ansprüche 1 bis 13,
**dadurch gekennzeichnet,**
**dass** als Mischungsverhältnis der β-Hydroxyalkylamid-Verbindung B) und des blockierten, nicht aromatischen Polyisocyanates C) so gewählt wird, dass das Verhältnis Hydroxylgruppen zu Isocyanatgruppen 0,5 : 1 bis 2,0 : 1 beträgt.

## Claims

1. A transparent or pigmented powder coating material with crosslinkers comprising hydroxyalkylamides and blocked polyisocyanates, essentially comprising:
A) from 20 to 99% by weight of at least one acidic polymer;
B) from 1 to 25% by weight of at least one β-hydroxyalkylamide;
C) from 0.05 to 10% by weight of at least one blocked non-aromatic polyisocyanate having an NCO functionality ≥ 2;
D) from 0 to 50% by weight of at least one pigment and/or inorganic filler;
E) from 0 to 5% by weight of at least one adjuvant or auxiliary.

2. A transparent or pigmented powder coating material according to claim 1, **characterized in that** the acidic polymer A) is at least one polyester resin having a glass transition temperature in the range from 30 to 85°C and an acid number of from 20 to 80 mg KOH/g.

3. A transparent or pigmented powder coating material according to claim 1, **characterized in that** the acidic polymer A) is at least one acrylate resin having an acid number in the range from 10 to 250 mg KOH/g and a melting point of from 60 to 160°C.

4. A transparent or pigmented powder coating material according to claim 1, **characterized in that** the acidic polymer A) is any desired mixture of at least one polyester resin and at least one acrylate resin.

5. A transparent or pigmented powder coating material according to at least any one of claims 1 to 4, **characterized in that** the β-hydroxyalkylamide B) has the formula I 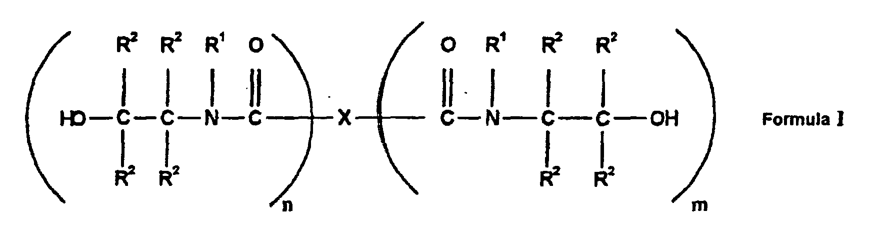 where
X is a chemical bond, hydrogen or a monovalent or polyvalent organic group derived from saturated, unsaturated or aromatic hydrocarbon groups and having 1-24 carbon atoms, or these radicals heteroatom-substituted;
R¹ is hydrogen, an alkyl, alkenyl, aryl or aralkyl radical having 1-24 carbon atoms, these radicals heteroatom-substituted or 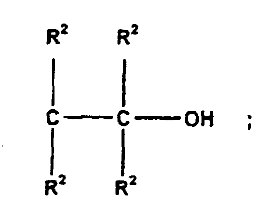
R² radicals independently of one another are identical or different and selected from hydrogen, an alkyl, aryl, aralkyl or alkenyl radical having 1-24 carbon atoms, or these radicals heteroatom-substituted;
n is an integer from 1 to 10;
m is an integer from 0 to 2; and
n+m is ≥ 2.

6. A transparent or pigmented powder coating material according to at least one of claims 1 to 5, **characterized in that** the non-aromatic blocked polyisocyanate C) comprises at least one compound from the group consisting of aliphatic, (cyclo)aliphatic, cycloaliphatic and heterocyclic polyisocyanates having at least two isocyanate groups.

7. A transparent or pigmented powder coating material according to claim 6, **characterized in that** the non-aromatic blocked polyisocyanate C) comprises as polyisocyanate component 2-methylpentamethylene 1,5-diisocyanate, 2,2,4-trimethylhexamethylene 1,6-diisocyanate, 2,4,4-trimethylhexamethylene 1,6-diisocyanate (TMDI), norbornane diisocyanate, isophorone diisocyanate, the isocyanurate of 2-methylpentamethylene 1,5-diisocyanate, the isocyanurate of hexamethylene diisocyanate or the isocyanurate of isophorone diisocyanate.

8. A transparent or pigmented powder coating material according to at least one of claims 1 to 7, **characterized in that** the polyisocyanate C) is blocked with acetone oxime, methyl ethyl ketoxime or acetophenone oxime, ε-caprolactam, ethyl acetoacetate, diethyl malonate, diisopropylamine, 3,5-dimethylpyrazole, 1,2,4-triazole, butyl glycolate or benzyl methacrylohydroxamate.

9. A transparent or pigmented powder coating material according to at least one of claims 1 to 8, **characterized in that** it comprises polyisocyanates C) which have been chain-extended and/or molecularly enlarged by trimerization, carbodiimidization, allophanate formation and biuretization.

10. A transparent or pigmented powder coating material according to at least one of claims 1 to 9, **characterized in that** auxiliaries and adjuvants present are levelling agents, devolatilizers and/or catalysts.

11. A transparent or pigmented powder coating material according to claim 10, **characterized in that** it comprises catalysts in a concentration of from 0.03 to 1.0% by weight, based on the total amount of powder coating material.

12. A transparent or pigmented powder coating material according to claim 11, **characterized in that** the catalysts comprise aluminium carboxylate salts, titanium carboxylate salts, aluminium oxides, zinc oxides and/or organotin compounds.

13. A transparent or pigmented powder coating material according to at least one of claims 1 to 12, **characterized in that** the ratio of the acidic polymers A) to the β-hydroxyalkylamide compound B) is chosen such that the ratio of carboxyl groups to hydroxyl groups is from 0.6:1 to 1.6:1.

14. A transparent or pigmented powder coating material according to at least one of claims 1 to 13, c ratio of the β-hydroxyalkylamide compound B) to the blocked non-aromatic polyisocyanate C) is chosen such that the ratio of hydroxyl groups to isocyanate groups is from 0.5:1 to 2.0:1.

## Revendications

1. Revêtements en poudre, transparents ou pigmentés, avec des réticulants faits d'hydroxyalkylamides et de polyisocyanates bloqués, contenant essentiellement :
A) de 20 à 99 % en poids d'au moins un polymère acide ;
B) de 1 à 25 % en poids d'au moins un β-hydroxyalkylamide ;
C) de 0,05 à 10 % en poids d'au moins un polyisocyanate bloqué non aromatique ayant une fonctionalité de NCO ≥ 2 ;
D) de 0 à 50 % en poids d'au moins un pigment et/ou d'une matière de remplissage inorganique ;
E) de 0 à 5 % en poids d'au moins un additif ou adjuvant.

2. Revêtements en poudre, transparents ou pigmentés, selon la revendication 1,
**caractérisés en ce que**
comme polymère acide A), ils contiennent au moins une résine de polyester ayant une température de transition vitreuse comprise entre 30 et 85°C et un indice d'acide compris entre 20 et 80 mg de KOH/g.

3. Revêtements en poudre, transparents ou pigmentés, selon la revendication 1,
**caractérisés en ce que**
comme polymère acide A), ils contiennent au moins une résine d'acrylate ayant un indice d'acide compris entre 10 et 250 mg de KOH/g et un point de fusion compris entre 60 et 160°C.

4. Revêtements en poudre, transparents ou pigmentés, selon la revendication 1.
**caractérisés en ce que**
comme polymère acide A), ils contiennent un mélange quelconque fait d'au moins une résine de polyester et au moins une résine d'acrylate.

5. Revêtements en poudre, transparents ou pigmentés, selon au moins une des revendications 1 à 4,
**caractérisés en ce que**
le β-hydroxyalkylamide B) présente la formule suivante I : 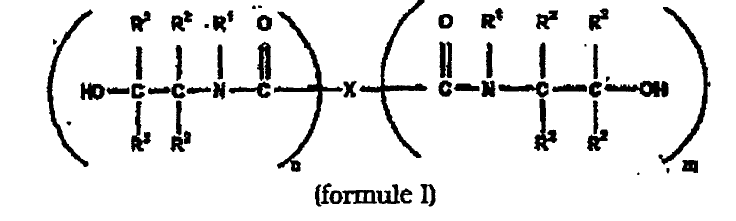 où les substituants ont les significations suivantes :
X : liaison chimique, hydrogène ou groupe organique monovalent ou polyvalent, dérivé de groupes hydrocarbure saturés, non saturés ou aromatiques, comportant de 1 à 24 atomes de carbone ou ces restes substitués par des hétéroatomes ;
R¹: hydrogène, reste alkyle, alcényle, aryle ou aralkyle, comportant de 1 à 24 atomes de carbone, ces restes substitués par des hétéroatomes, ou encore : 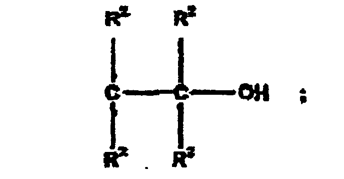
R²: restes égaux ou différents indépendamment les uns des autres, sélectionnes parmi les substances suivantes : hydrogène, reste alkyle, alcényle, aryle ou aralkyle. comportant de 1 à 24 atomes de carbone ou ces restes substitués par des hétéroatomes ;
n : nombre entier de 1 à 10 ;
m : nombre entier de 0 à 2 ;
n+m : ≥ 2

6. Revêtements en poudre, transparents ou pigmentés, selon au moins une des revendications 1 à 5,
**caractérises en ce que**
comme polyisocyanate C) bloqué non aromatique ils contiennent au moins un composé appartenant au groupe des polyisocyanates aliphatiques, (cyclo)aliphatiques, cycloaliphatiques ou hétérocycliques et comportant au moins deux groupes isocyanate.

7. Revêtements en poudre, transparents ou pigmentés, selon la revendication 6,
**caractérisés en ce que**
le polyisocyanate C) bloqué non aromatique comprend, comme composant polyisocyanate l'une des substances suivantes: 2-méthylpentaméthylène-1,5-diisocyanate, 2,2,4-triméthylhexaméthyléne-1,6-diisocyanate, 2,4,4-triméthylhexaméthylène-1,6-diisocyanate (TMDI), diisocyanate de norbomane, diisocyanate d'isophorone, isocyanurate du 2-méthylpentaméthylène-1,5-diisocyanate, isocyanurate de l'hexaméthylènediisocyanate ou isocyanurate du diisocyanate d'isophorone.

8. Revêtements en poudre, transparents ou pigmentés, selon au moins une des revendications 1 à 7,
**caractérisés en ce que**
le polyisocyanate C) est bloqué par l'une des substances suivantes : acétonoxime, méthyléthylcétoxime et acétophénonoxime, ε-caprolactame, éthylester d'acide acétoacétique, diéthylester d'acide malonique, diisopropylamine, 3,5-diméthylpyrazol, 1,2,4-triazol, butylester d'acide glycolique ou benzylméthacrylohydroxamate.

9. Revêtements en poudre, transparents ou pigmentés. selon au moins une des revendications 1 à 8,
**caractérisés en ce qu'**
ils contiennent des polyisocyanates C) à chaîne prolongée, et/ou à molécule agrandie par trimérisation, diimidisation au carbone, formation d'allophanate et biurétisation.

10. Revêtements en poudre, transparents ou pigmentés, selon au moins une des revendications 1 à 9,
**caractérisés en ce que**
comme adjuvants et additifs, ils contiennent des produits d'écoulement, des agents de dégazage et/ou des catalyseurs.

11. Revêtements en poudre, transparents ou pigmentés, selon la revendication 10,
**caractérises en ce qu'**
ils contiennent des catalyseurs, en concentration de 0,03 à 1,0 % en poids par rapport à la quantité totale de revêtements en poudre.

12. Revêtements en poudre, transparents ou pigmentés, selon la revendication 11,
**caractérisés en ce que**
comme catalyseurs, ils contiennent les substances suivantes : sels de carboxylate d'aluminium, sels de carboxylate de titane, oxydes d'aluminium, oxydes de zinc et/ou composés organiques d'étain.

13. Revêtements en poudre, transparents ou pigmentés, selon au moins l'une des revendications 1 à 12,
**caractérisés en ce que**
le rapport de mélange des polymères acides A) et du composé de b-hydroxyalkylamide B) est choisi de telle manière que le rapport des groupes carboxyle aux groupes hydroxyle soit de 0,6 : 1 à 1,6 :1.

14. Revêtements en poudre, transparents ou pigmentés, selon au moins l'une des revendications 1 à 13,
**caractérisés en ce que**
le rapport de mélange du composé de β-hydroxyalkylamide B) et du polyisocyanate non aromatique bloqué C) est choisi de telle manière que le rapport des groupes hydroxyle aux groupes isocyanate vaut de 0,5 :1 à 2,0: 1.
